# EUROPEAN PATENT APPLICATION

(11) **EP 4 657 468 A1**
(43) Date of publication of application: **03.12.2025**
(21) Application number: 24747301.0
(22) Date of filing: 23.01.2024
(51) Int. Cl.: H01B 13/00, C01B 25/14, H01B 1/06, H01B 1/10, H01M 10/0562

(54) **METHOD FOR PRODUCING SULFIDE SOLID ELECTROLYTE POWDER**

(30) Priority: 27.01.2023 JP 2023011196
(71) Applicant: AGC INC., Chiyoda-ku, Tokyo 1008405 (JP)
(72) Inventor: FUJII Naoki, Tokyo 100-8405 (JP)
(74) Representative: Müller-Boré & Partner Patentanwälte PartG mbB
(86) International application number: PCT/JP2024/001852
(87) International publication number: WO 2024/157974

(57) **Abstract**

The present invention relates to a method for producing a sulfide solid electrolyte, the method comprising mixing raw materials together to produce a raw material mixture, synthesizing at least one powder selected from a sulfide solid electrolyte powder and a precursor of a sulfide solid electrolyte powder from the raw material mixture, and subjecting the powder to a heating treatment, in which the heating treatment is performed in an atmosphere having a SO₂ concentration of 1 to 1000 ppm by volume.

## Description

### TECHNICAL FIELD

The present invention relates to a method for producing a sulfide solid electrolyte powder.

### BACKGROUND ART

Lithium-ion secondary batteries are widely used for a portable electronic device such as a mobile phone and a notebook computer.

In the related art, a liquid electrolyte has been used in a lithium-ion secondary battery. On the other hand, attention has been paid to an all-solid-state lithium-ion secondary battery in which a solid electrolyte is used as an electrolyte of a lithium-ion secondary battery in recent years, from the viewpoint of improving safety, charging and discharging at a high speed, and reducing the size of a case.

Examples of the solid electrolyte used in the all-solid-state lithium-ion secondary battery include a sulfide solid electrolyte.

Examples of a method for synthesizing the sulfide solid electrolyte include a method (solid phase reaction method) in which a raw material mixture is subjected to mechanical milling and then fired, and a method (melting method) in which a raw material mixture is heated and melted to prepare a melt and the melt is cooled and solidified.

As an example of the sulfide solid electrolyte, Patent Literature 1 discloses an argyrodite sulfide solid electrolyte. The sulfide solid electrolyte has a cubic structure belonging to a space group F-43m, and contains a compound represented by a composition formula: Li₇₋ₓPS_{6-X}Ha_{X} (where Ha represents Cl or Br) (where x = 0.2 to 1.8), and a lightness L value of an L* a* b* color system is 60.0 or more. This is intended to improve charge and discharge efficiency and cycle characteristics by increasing the lithium ion conductivity and decreasing electron conductivity.

Patent Literature 2 discloses a sulfide solid electrolyte having an argyrodite crystal structure containing lithium, phosphorus, sulfur, and two or more elements X selected from halogen elements, in which a molar ratio b (S/P) of sulfur to phosphorus and a molar ratio c (X/P) of the element X to phosphorus satisfy a relationship of 0.23 < c/b < 0.57. This is intended to have higher ionic conductivity and to reduce a generation amount of hydrogen sulfide.

### CITATION LIST

### PATENT LITERATURE

Patent Literature 1: WO2015/012042
Patent Literature 2: WO2018/047565

### SUMMARY OF INVENTION

### TECHNICAL PROBLEM

When such a sulfide solid electrolyte is actually applied to a lithium-ion secondary battery, the sulfide solid electrolyte is used in a form of a fine powder having a particle size of several µm or less. Therefore, after obtaining a powdery sulfide solid electrolyte, that is, a sulfide solid electrolyte powder, it is necessary to further finely pulverize the powder.

On the other hand, for the purpose of homogenizing a crystal structure and stabilizing a quality of the solid electrolyte, it is preferable to perform a heat treatment on the obtained sulfide solid electrolyte powder, but this heat treatment causes aggregation and sintering of the powder. In particular, the aggregation is likely to occur even at a temperature lower than a sintering temperature. Therefore, before the sulfide solid electrolyte powder is finely pulverized to obtain the fine powder, the sulfide solid electrolyte powder in an aggregated state is required to be pulverized again, and a load of the series of pulverization steps from the heat treatment to the fine pulverization is large.

Therefore, an object of the present invention is to provide a method for producing a sulfide solid electrolyte powder capable of preventing aggregation of particles when a heat treatment is performed.

### SOLUTION TO PROBLEM

The present inventors have conducted studies on the assumption that aggregation of particles during a heat treatment is caused by sulfur desorbed from a particle surface serving as a binder and connecting the particles, and have found that the above problems can be solved by removing desorbed sulfur as SO₂ or SOₓ during the heat treatment, thereby completing the present invention.

That is, the present invention relates to the following [1] to [10].
[1] A method for producing a sulfide solid electrolyte powder, the method including:
   mixing a raw material to obtain a raw material mixture;
   synthesizing at least one powder of a sulfide powder and a sulfide precursor powder from the raw material mixture; and
   subjecting the powder to a heat treatment,
   in which the heat treatment is performed in an atmosphere having a SO₂ concentration of 1 ppm by volume to 1000 ppm by volume.
[2] The method for producing a sulfide solid electrolyte powder according to [1],
   in which the powder is placed in a container during the heat treatment, and
   the container satisfies a relationship of 2a > b, a being a long side of a bottom surface and b being a height.
[3] The method for producing a sulfide solid electrolyte powder according to [2], in which the container has surface roughness Ra of 0.1 µm to 30 µm.
[4] The method for producing a sulfide solid electrolyte powder according to [2] or [3], in which a material for the container contains at least one of aluminum and carbon as an element.
[5] The method for producing a sulfide solid electrolyte powder according to any one of [2] to [4], in which the container has a porosity of 1% to 50%.
[6] The method for producing a sulfide solid electrolyte powder according to any one of [1] to [5], in which the powder has an average particle diameter of 1 µm to 100 µm.
[7] The method for producing a sulfide solid electrolyte powder according to any one of [1] to [6], in which in the synthesis, a melt obtained by heating the raw material mixture is cooled to obtain the powder containing the sulfide powder.
[8] The method for producing a sulfide solid electrolyte powder according to any one of [1] to [7], in which in the synthesis, the raw material mixture is mechanically milled to obtain the powder containing the sulfide precursor powder.
[9] The method for producing a sulfide solid electrolyte powder according to any one of [1] to [8],
   in which the raw material contains a Li element, a P element, an S element, and a Ha element, and
   the obtained sulfide solid electrolyte powder has an argyrodite crystal structure.
[10] The method for producing a sulfide solid electrolyte powder according to [9], in which the heat treatment is performed at a temperature of 200°C to 600°C.

### ADVANTAGEOUS EFFECTS OF INVENTION

According to a production method of the present invention, it is possible to prevent aggregation of particles when a heat treatment is performed. Therefore, when the sulfide solid electrolyte powder is applied to a solid electrolyte layer of a lithium-ion secondary battery or the like, a load of performing a pulverization step again prior to the fine pulverization step can be reduced.

### BRIEF DESCRIPTION OF DRAWINGS

FIG. 1 is a flow diagram showing a method for producing a sulfide solid electrolyte according to the present embodiment.
FIG. 2 is a flow diagram showing an aspect of the method for producing a sulfide solid electrolyte according to the present embodiment.
FIG. 3 is a flow diagram showing an aspect of the method for producing a sulfide solid electrolyte according to the present embodiment.

### DESCRIPTION OF EMBODIMENTS

Hereinafter, the present invention is described in detail, but the present invention is not limited to the following embodiments, and can be freely modified and implemented without departing from the gist of the present invention. In addition, "to" indicating a numerical range is used to include numerical values written before and after it as a lower limit value and an upper limit value.

### [Method for Producing Sulfide Solid Electrolyte Powder]

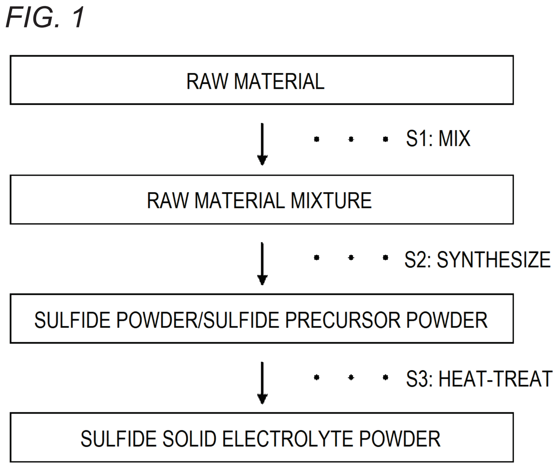

As shown in FIG. 1, a method for producing a sulfide solid electrolyte powder according to the present embodiment (hereinafter, also referred to as "present production method") includes the following step S1 to step S3 in order.

Step S1 is a step of mixing raw materials to obtain a raw material mixture.

Step S2 is a step of synthesizing at least one of a sulfide powder and a sulfide precursor powder from the raw material mixture obtained in step S1.

Step S3 is a step of heat-treating the powder obtained in step S2.

When the present production method is a melting method, in step S2, it is preferable to obtain a powder containing a sulfide powder by cooling a melt obtained by heating the raw material mixture, and it is more preferable to obtain a powder containing a sulfide powder by cooling the melt and pulverization.

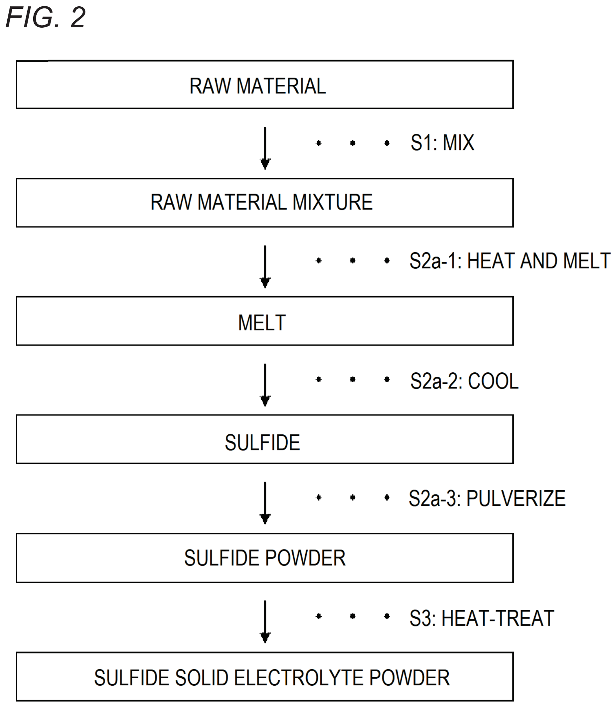

Specifically, as shown in FIG. 2, step S2 more preferably includes steps S2a-1 to S2a-3.

Step S2a-1 is a step of heating and melting the raw material mixture obtained in step S1 to obtain a melt.

Step S2a-2 is a step of cooling the melt obtained in step S2a-1 to obtain a solid containing a crystal.

Step S2a-3 is a step of pulverizing the solid obtained in step S2a-2 to obtain a sulfide powder.

In step S2a-2, a powder may be obtained while cooling the melt. In this case, since step S2a-2 also serves as the pulverization of step S2a-3, the sulfide powder is obtained without separately passing through the pulverization step of step S2a-3.

By performing the heat treatment of step S3 on the sulfide powder obtained in step S2a-3, a sulfide solid electrolyte powder in which a crystal structure is homogenized and a quality is stabilized is obtained. Lithium ion conductivity of the sulfide solid electrolyte powder is increased by the homogenization and the stabilization, and battery performance is improved when the sulfide solid electrolyte powder is applied to a lithium-ion secondary battery.

When the present production method is a solid phase reaction method, in step S2, it is preferable to obtain a powder containing the sulfide precursor powder by mechanically milling the raw material mixture.

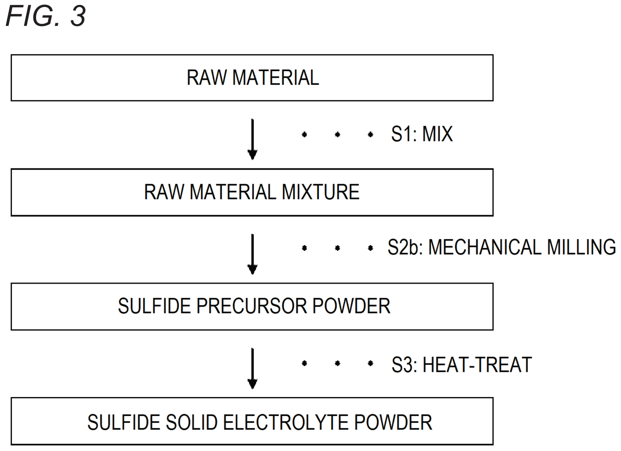

Specifically, as shown in FIG. 3, step S2 preferably includes step S2b.

Step S2b is a step of mechanically milling the raw material mixture obtained in step S1 to obtain the sulfide precursor powder.

By performing the heat treatment of Step S3 on the sulfide precursor powder obtained in Step S2b, a sintered body obtained by firing the sulfide precursor is produced, and the sulfide solid electrolyte powder is obtained.

Each step is described.

### -Step S1

In step S1, the raw materials are mixed to obtain the raw material mixture.

Depending on a composition of the obtained sulfide solid electrolyte powder, for example, the raw material mixture is obtained by mixing a raw material containing a Li element, a raw material containing a P element, and a raw material containing an S element.

In the case of obtaining a sulfide solid electrolyte powder containing an argyrodite crystal structure, a raw material containing a Ha element is further contained in addition to the raw material containing the Li element, the raw material containing the P element, and the raw material containing the S element. In the present specification, the Ha element is at least one element selected from the group consisting of F, Cl, Br, and I.

The raw material may contain another element in accordance with a desired composition of the sulfide solid electrolyte powder. "In accordance with the composition of the sulfide solid electrolyte" means that, for example, when a part of the Li element, P element, S element, and the like is replaced with another element, a raw material containing the replaced other element may also be contained.

Examples of the other element include a Si element, an Al element, a Sn element, an In element, a Cu element, a Sb element, a Ge element, and an O element.

Known raw materials in the related art can be used as the raw material containing the Li element, the raw material containing the P element, the raw material containing the S element, and the raw material containing the Ha element and the raw material containing the other element if desired.

Specifically, elemental Li or a compound containing Li, elemental P or a compound containing P, elemental S or a compound containing S, optionally a compound containing Ha, and the like can be appropriately combined and used. When the sulfide solid electrolyte powder contains an O element, an oxide may be used as the compound. The compound may be a compound containing two or more of Li, P, S, and optionally other elements such as Ha. For example, phosphorus pentasulfide (P₂S₅) may be used as a compound serving as both the compound containing S and the compound containing P. Lithium halide may be used as a compound serving as both the compound containing Li and the compound containing Ha.

As the raw material containing the Li element, in addition to metallic lithium, a compound containing Li including lithium compounds such as lithium sulfide (Li₂S), lithium carbonate (Li₂CO₃), lithium sulfate (Li₂SO₄), lithium oxide (Li₂O), and lithium hydroxide (LiOH) may be used.

The raw material containing the Li element is preferably lithium sulfide from the viewpoint of ease of handling and reactivity. On the other hand, since lithium sulfide is expensive, it is preferable to use a lithium compound other than lithium sulfide, metallic lithium, or the like, from the viewpoint of reducing a production cost. Specifically, it is preferable to use one or more selected from the group consisting of metallic lithium, lithium carbonate (Li₂CO₃), lithium sulfate (Li₂SO₄), lithium oxide (Li₂O), and lithium hydroxide (LiOH). These may be used alone or in combination of two or more kinds thereof.

As the raw material containing the S element, in addition to elemental sulfur, a compound containing S including phosphorus sulfides such as phosphorus trisulfide (P₂S₃) and phosphorus pentasulfide (P₂S₅), other sulfur compounds containing phosphorus, and a compound containing sulfur may be used. Examples of the compound containing sulfur include H₂S, CS₂, iron sulfides such as FeS, Fe₂S₃, FeS₂, or Fe₁₋ₓS, bismuth sulfide (Bi₂S₃), and copper sulfides such as CuS, Cu₂S, or Cu₁₋ₓS.

The raw material containing the S element is preferably phosphorus sulfide, and more preferably phosphorus pentasulfide (P₂S₅), from the viewpoint of reactivity and from the viewpoint of preventing the inclusion of elements other than the elements constituting the target sulfide solid electrolyte powder. These may be used alone or in combination of two or more kinds thereof. Phosphorus sulfide is a compound serving as both a substance containing S and a substance containing P.

As the raw material containing the P element, in addition to elemental phosphorus, a compound containing P including phosphorus sulfides such as phosphorus trisulfide (P₂S₃) and phosphorus pentasulfide (P₂S₅), and a phosphorus compound such as sodium phosphate (Na₃PO₄) and lithium thiophosphate (Li₃PS₄₋ₓOₓ) may be used.

The raw material containing the P element is preferably phosphorus sulfide, and more preferably phosphorus pentasulfide (P₂S₅), from the viewpoints of ease of reaction when synthesizing an intermediate to be described later and preventing the inclusion of elements other than elements constituting the target sulfide solid electrolyte powder. These may be used alone or in combination of two or more kinds thereof.

When an oxide is contained as the raw material containing the P element, examples thereof include P₂O₅, Li₃PO₄, and Li₄P₂O₇. Among them, P₂O₅ is preferred from the viewpoint of ease of production. These compounds may be used alone or in combination of two or more kinds thereof.

As an optional component, examples of the compound containing Ha, which is a raw material containing the Ha element, include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides.

The raw material containing the Ha element is preferably lithium halides, and more preferably LiCl, LiBr, and LiI, from the viewpoint of preventing the inclusion of elements other than the elements constituting the target sulfide solid electrolyte powder. These compounds may be used alone or in combination of two or more kinds thereof.

The lithium halide may also be a compound containing Li. When the raw material contains lithium halide, some or all of Li in the raw material may be derived from the lithium halide.

When elements other than Li, S, P, and Ha are also contained as the elements constituting the sulfide solid electrolyte powder, the raw materials containing other elements are also mixed to obtain a raw material mixture.

Examples of the raw material containing the Si element as an optional component include SiO₂ and SiS₂. Among them, SiO₂ is more preferred from the viewpoint of lithium ion conductivity and the water resistance. These compounds may be used alone or in combination of two or more kinds thereof.

Examples of the raw material containing the Al element as an optional component include Al₂S₃, Al₂O₃, and AlCl₃. Among them, Al₂S₃ and AlCl₃ are preferred, and Al₂S₃ is more preferred, from the viewpoint of the lithium ion conductivity. These compounds may be used alone or in combination of two or more kinds thereof.

Examples of the raw material containing the Sn element as an optional component include SnS, SnS₂, SnO, SnO₂, and SnCl₂. Among them, from the viewpoint of lithium ion conductivity, SnS₂ and SnCl₂ are preferred, and SnS₂ is more preferred. These compounds may be used alone or in combination of two or more kinds thereof.

Examples of the raw material containing the In element as an optional component include In₂O₃, In₂S₃, and InCl₃. Among them, from the viewpoint of the lithium ion conductivity, In₂S₃ and InCl₃ are preferred, and In₂S₃ is more preferred. These compounds may be used alone or in combination of two or more kinds thereof.

Examples of the raw material containing the Cu element as an optional component include Cu₂O, CuO, Cu₂S, CuS, and CuCl₂. Among them, from the viewpoint of the lithium ion conductivity, CuS and CuCl₂ are preferred, and CuS is more preferred. These compounds may be used alone or in combination of two or more kinds thereof.

Examples of the raw material containing the Sb element as an optional component include Sb₂O₃, Sb₂S₃, and SbCl₃. Among them, from the viewpoint of lithium ion conductivity, Sb₂S₃ and SbCl₃ are preferred, and Sb₂S₃ is more preferred. These compounds may be used alone or in combination of two or more kinds thereof.

Examples of the raw material containing the Ge element as an optional component include GeO₂, GeS, GeS₂, and GeCl₂. Among them, from the viewpoint of the lithium ion conductivity, GeS₂ and GeCl₂ are preferred, and GeS₂ is more preferred. These compounds may be used alone or in combination of two or more kinds thereof.

Examples of the raw material containing the B element as an optional component include B₂S₃, B₂O₃, and BCl₃. Among them, from the viewpoint of lithium ion conductivity, B₂S₃ and BCl₃ are preferred, and B₂S₃ is more preferred. These compounds may be used alone or in combination of two or more kinds thereof.

The raw materials can be mixed by, for example, mixing in a mortar, mixing using a medium such as a planetary ball mill, and medium-less mixing such as a pin mill, a powder stirrer, and air flow mixing.

However, when the present production method is performed by the solid phase reaction method, by the mechanical milling in step S2b as the subsequent step S2, the raw material mixture is formed into a sulfide precursor powder which is a more uniform mixture or a sulfide precursor powder which is an amorphous compound is obtained. In the mechanical milling process of step S2b, a chemical reaction occurs, and energy is applied as a bonding state of elements changes. The mixing in step S1 means a mixing state in which a plurality of raw materials are put in one container or the raw materials put in the container are mixed by a mortar, a stirring blade, or the like before being subjected to step S2b.

### -Step S2

In step S2, at least one of the sulfide powder and the sulfide precursor powder is synthesized from the raw material mixture obtained in step S2.

When the sulfide solid electrolyte powder is produced by the melting method, the powder containing the sulfide powder is obtained.

When the sulfide solid electrolyte powder is produced by the solid phase reaction method, the powder containing the sulfide precursor powder is obtained.

In the melting method, as described above, steps S2a-1 to S2a-3 are performed.

In step S2a-1, the raw material mixture obtained in step S1 is heated and melted to obtain the melt.

A specific method for heating and melting the raw material mixture in step S2a-1 is not particularly limited, and the raw material is charged into a heat-resistant container and heated in a heating furnace. The raw material mixture may be sealed in the heat-resistant container. Melting may be performed in an atmosphere containing a sulfur element or the like. Examples of the sulfur element-containing atmosphere include a mixed gas atmosphere of an inert gas and a sulfur element-containing gas such as a sulfur gas, a hydrogen sulfide gas, or a sulfur dioxide gas.

As the heat-resistant container, a heat-resistant container made of carbon, a heat-resistant container containing an oxide such as quartz, a quartz glass, a borosilicate glass, an aluminosilicate glass, alumina, zirconia, and mullite, a heat-resistant container containing a nitride such as silicon nitride and boron nitride, and a heat-resistant container containing a carbide such as silicon carbide may be used. These heat-resistant containers may have a bulk formed of the above-described material, or may be a container having a layer of carbon, an oxide, a nitride, a carbide, or the like, such as a carbon-coated quartz tube.

A heating temperature when the raw material mixture is heated and melted varies depending on the raw materials to be used and the composition of the raw material mixture, but is, for example, preferably 550°C to 1000°C, more preferably 600°C to 950°C, still more preferably 630°C to 900°C, and particularly preferably 650°C to 850°C. Here, the heating temperature is preferably 550°C or higher, more preferably 600°C or higher, still more preferably 630°C or higher, and particularly preferably 650°C or higher, from the viewpoint of increasing a melting property of the raw material and homogenizing the melt in a short time. The heating temperature is preferably 1000°C or less, more preferably 950°C or less, still more preferably 900°C or less, and particularly preferably 850°C or less, from the viewpoints of preventing deterioration of components caused by heating, preventing a composition deviation caused by volatilization of components, and further preventing decomposition.

A time for the heating and melting varies depending on a scale, but is preferably 10 minutes to 10 hours, more preferably 30 minutes to 9.5 hours, still more preferably 45 minutes to 9 hours, and particularly preferably 1 hour to 9 hours. Here, the time for the heating and melting is preferably 10 minutes or more, more preferably 30 minutes or more, still more preferably 45 minutes or more, and particularly preferably 1 hour or more, from the viewpoint of allowing the reaction to proceed smoothly. From the viewpoint of productivity, the time for the heating and melting is preferably 10 hours or less, more preferably 9.5 hours or less, and still more preferably 9 hours or less.

A pressure during the heating and melting is not particularly limited, but for example, a normal pressure or a slight pressure is preferred, and normal pressure is more preferred.

A dew point during the heating and melting is preferably -20°C or lower, and a lower limit thereof is not particularly limited, but is usually about -80°C. An oxygen concentration is preferably 1000 ppm by volume or less.

In step S2a-1, whether the melt is completely dissolved can be checked by the absence of a peak derived from a crystal in high-temperature X-ray diffraction measurement.

In the subsequent step S2a-2, the melt obtained in step S2a-1 is cooled to precipitate crystals, thereby obtaining a solid containing the crystals. The solid obtained here is a sulfide compound and contains crystals. This sulfide can also function as a solid electrolyte, but is inferior in homogeneity because it has not undergone subsequent step S3.

The cooling may be performed by a known method, and the method is not particularly limited. More specific examples of the cooling method include a method in which the melt is poured onto a plate-like body made of carbon or the like and then cooled, a method in which the melt is poured into a narrow gap to be formed into a thin shape, such as a twin roll process, and a method in which the melt is sprayed and cooled in air.

A cooling rate is preferably 0.1°C/sec to 10000°C/sec, more preferably 0.5°C/sec to 5000°C/sec, and still more preferably 1°C/sec to 1000°C/sec. Here, the cooling rate is preferably 0.1°C/sec or more, more preferably 0.5°C/sec or more, and still more preferably 1°C/sec or more, from the viewpoint of increasing composition homogeneity and preventing variation in quality. An upper limit value of the cooling rate is not particularly limited, and the upper limit value is 1000000°C/sec or less in consideration of the cooling rate of a twin roller, which is generally said to have the highest rapid cooling rate, and from the viewpoint of actual production, the cooling rate is more preferably 10000°C/sec or less, still more preferably 5000°C/sec or less, and even more preferably 1000°C/sec.

An atmosphere during the cooling is preferably an inert atmosphere with a low moisture content, similar to that in the heating and melting in step S2a-1.

In the subsequent step S2a-3, the solid obtained in step S2a-2 is pulverized to obtain the sulfide powder.

Here, the pulverization may be performed by either wet pulverization or dry pulverization, but unlike fine pulverization performed when the sulfide powder is supplied to the lithium-ion secondary battery as the solid electrolyte, which will be described later, the pulverization is preferably performed, for example, until an average particle diameter becomes 1 µm to 300 µm.

In the present description, the average particle diameter refers to a median diameter (D50) determined from a volume-based particle size distribution chart obtained by measuring a particle size distribution using a particle size distribution meter using a laser diffraction method, which means a particle diameter at which 50 vol% of particles has a particle diameter equal to or less than the value.

Step S2a-3 does not need to be performed when the sulfide obtained in step S2a-2 is a powder having an average particle diameter of about 1 µm to 100 µm.

In the solid phase reaction method, as described above, in step S2b, the raw material mixture obtained in step S1 is mechanically milled to obtain the sulfide precursor powder, which is referred to as a synthesis. The mechanical milling is not particularly limited as long as it is a method of mixing a plurality of raw materials to be the sulfide solid electrolyte while applying mechanical energy, and examples thereof include a ball mill such as a planetary ball mill, a vibration mill, a turbo mill, mechano-fusion, and a disk mill.

When the planetary ball mill is used, a rotation speed of a plate is preferably, for example, 100 rpm to 500 rpm, and a treatment time is preferably, for example, 1 hour to 100 hours, and more preferably 1 hour to 50 hours.

Materials and sizes of the container and the pulverization balls used in the planetary ball mill are not particularly limited, and known ones in the related art can be used. Examples of the material include alumina, zirconia, glass, and silicon nitride. A diameter of the pulverization balls is, for example, 0.3 mm to 20 mm.

The mechanical milling may be dry milling or wet milling. When the wet mechanical milling is performed, it is preferable to use a dispersion medium that does not react with each raw material to generate hydrogen sulfide or the like.

When the wet mechanical milling is performed, the sulfide precursor powder is preferably dried before the subsequent step S3. A drying method is not particularly limited, and examples thereof include a method using an external heat type drying furnace or a hot air circulation type drying furnace.

Unlike a powder of a compound containing crystals that function as the solid electrolyte, such as a sulfide powder obtained by the melting method, the sulfide precursor powder is a powder of a mixture in which a plurality of raw materials are mixed very homogeneously, a powder in which a chemical bonding state has been changed from that of starting materials through a reaction, or a powder of an amorphous compound.

For the subsequent step S3, an average particle diameter of the sulfide powder or the sulfide precursor powder obtained in step S2 is preferably 1 µm to 300 µm, more preferably 3 µm to 150 µm, and still more preferably 5 µm to 100 µm. Here, from the viewpoint of preventing scattering during the heat treatment, the average particle diameter after the pulverization is preferably 1 µm or more, more preferably 3 µm or more, and still more preferably 5 µm or more. The average particle diameter after the pulverization is preferably 300 µm or less, more preferably 150 µm or less, and still more preferably 100 µm or less from the viewpoint of more easily exhibiting an effect of the subsequent heat treatment and easily being subjected to the subsequent fine pulverization.

### -Step S3

In step S3, the powder obtained in step S2 is heat-treated.

The sulfide powder obtained by the melting method becomes a sulfide solid electrolyte powder in which homogeneity is enhanced and the quality as the solid electrolyte is stabilized as described above by the heat treatment in Step S3.

The sulfide precursor powder obtained by the solid phase reaction method becomes a sulfide solid electrolyte powder which is a powder of a sintered body which has been fired by the heat treatment of Step S3.

In general, when a compound is synthesized and settles into a thermodynamically stable structure, a further reaction does not proceed. In particular, when a synthesis reaction is a reaction between powders, if a heterogeneous interface is formed, progress of the reaction stops or becomes extremely slow.

On the other hand, in particular, in the melting method, after the sulfide powder is obtained from the raw material mixture, the sulfide powder is pulverized as necessary, and then heat energy such as a heat treatment is applied again, so that a sulfide solid electrolyte powder in which particles become more homogeneous and a quality is stable can be obtained.

The heat treatment is performed in an atmosphere having a SO₂ concentration of 1 ppm by volume to 1000 ppm by volume. Accordingly, aggregation of the sulfide powder and the sulfide precursor powder can be prevented.

Although the details are not clear, as described above, it is considered that sulfur desorbed from the particle surface serves as a binder, and the particles are connected to one another to cause the aggregation. Further, it is considered that the desorbed sulfur that promotes the aggregation reacts with oxygen in a gas to become SO₂, SOₓ, or the like, and is removed as an exhaust gas, whereby sulfur that functions as the binder decreases, and the aggregation is prevented.

The above effect is effective not only at the time of heat treatment for the homogenization and the stabilization in the melting method, but also at the time of heat treatment which is the firing performed for synthesizing the sulfide solid electrolyte in the solid phase reaction method.

The SO₂ concentration such as 1 ppm by volume to 1000 ppm by volume in the atmosphere is a result of the reaction of the desorbed sulfur with oxygen, and the SO₂ concentration is preferably 2 ppm by volume to 500 ppm by volume, and more preferably 3 ppm by volume to 100 ppm by volume. Here, the SO₂ concentration is 1 ppm by volume or more, but is preferably 2 ppm by volume or more, and more preferably 3 ppm by volume or more from the viewpoint of further preventing the aggregation of the powder. The SO₂ concentration is 1000 ppm by volume or less, but is preferably 500 ppm by volume or less, and more preferably 100 ppm by volume or less from the viewpoint of preventing oxidative decomposition of an electrolyte.

The SO₂ concentration can be adjusted by an amount of oxygen introduced during the heat treatment or an amount of oxygen brought from a container.

Oxygen may be introduced by pouring a gas containing an oxygen element at the time of heating and firing, or may be introduced by oxygen derived from a container or other carriers.

Examples of oxygen derived from the container include a method of using a container that has not been pre-heated or has not been sufficiently pre-heated, whereas a container is used from which adsorbed moisture and oxygen has been removed by pre-heating or the like in the related art, or a method of using a porous container having a large specific surface area.

Examples of oxygen derived from other carriers include a method using oxygen or water adsorbed on a heating target.

The present inventors have found that, in addition to the SO₂ concentration in the atmosphere during the heat treatment, the aggregation of the powders can be mitigated and prevented by the shape of the container.

For example, as the production of the sulfide solid electrolyte powder is performed in a large amount, a degree of crushing of the powder or gas permeation affects the aggregation. That is, the larger the production scale, the greater the degree to which the powder is compacted by own weight, and the closer the powder is to a bottom of the container, the denser the powder is and the more likely the powder is to aggregate. Further, in relation to the fact that sulfur desorbed from the bottom of the container in which the powder is dense is difficult to diffuse to surroundings, sulfur accumulated in the bottom wets and spreads over the entire bottom to flow along the bottom, and thus a sulfur-rich layer is likely to be formed, and as a result, the powder is likely to aggregate. Furthermore, the oxygen-containing gas that reacts with the desorbed sulfur is less likely to penetrate into a dense powder aggregate, and it is difficult to synthesize SO₂ and SOₓ.

For these reasons, it is presumed that the aggregation is further promoted when a large amount of sulfide solid electrolyte powder is produced.

On the other hand, the present inventors have found that the aggregation can be suitably prevented by forming the container shape into a shape having a low height and a wide bottom.

That is, the container into which the powder is placed during the heat treatment preferably satisfies a relationship of 2a > b in which a is a long side of a bottom surface and b is a height. It is more preferable that a and b satisfy a relationship of 1.5a > b.

Examples of the case where a bottom surface shape of the container is a shape other than a rectangular shape include a circle including a perfect circle and an ellipse, and a polygon. When the bottom surface shape is a circle, a long side of the bottom surface means a long side of a square or a rectangle in which the circle is an inscribed circle. When the bottom surface shape is a triangle, a length of the longest side is the long side of the bottom surface. When the bottom surface shape is a polygon having five or more sides, a length of the longest diagonal line is defined as the long side of the bottom surface.

Furthermore, it is found that the aggregation of the powder is more likely to occur at an interface between the powder and a container side surface or the container bottom surface. This is considered to be due to adhesiveness between the container and the powder.

Therefore, surface roughness Ra of the container is preferably 0.1 µm to 30 µm, more preferably 0.4 µm to 10 µm, and still more preferably 0.8 µm to 8 µm. Here, the surface roughness Ra is preferably 0.1 µm or more, more preferably 0.4 µm or more, and still more preferably 0.8 µm or more from the viewpoint of lowering wettability between the container and the powder and further preventing the aggregation. An upper limit is not particularly limited, but from the viewpoint of ease of use, the surface roughness Ra is preferably 30 µm or less, more preferably 10 µm or less, and still more preferably 8 µm or less. The surface roughness is determined as defined in JIS B 0601:2001, and refers to a center line average roughness.

In relation to the adhesiveness, porosity of the container refers to an open porosity. The open porosity herein means a value measured in accordance with JIS R1634:1998. The porosity of the container is preferably 1% or more, and more preferably 1% to 50%. Here, from the viewpoint of further preventing the aggregation, the porosity is preferably 1% or more, more preferably 5% or more, still more preferably 10% or more, and even more preferably 15% or more. An upper limit of the porosity is not particularly limited as long as the powder does not fall, and is, for example, 50% or less.

In relation to the adhesiveness, a material for the container preferably contains at least one of aluminum and carbon as an element. When the container is, for example, ceramic, examples of the material include carbon, alumina, mullite, and silicon carbide. When the container is made of, for example, a composite material, examples of the material include composite materials such as alumina fibers or carbon fiber reinforced ceramics and resins, glass ceramics, and alloys. The container may contain at least one of aluminum and carbon as an element on a surface thereof.

Among them, a ceramic containing at least one of aluminum and carbon as an element is more preferable, the material is further preferably carbon or alumina, and carbon is particularly preferable.

The wettability between the container and the powder can be evaluated by placing a sulfur powder on the same material as the container, heating and melting the sulfur powder, and checking a contact angle. This is because a compound that affects the wettability is considered to be sulfur.

When the sulfide powder is heat-treated, a heating temperature varies depending on a composition of the sulfide powder, that is, a target sulfide solid electrolyte, but is, for example, preferably 200°C to 600°C, more preferably 350°C to 500°C, still more preferably 380°C to 460°C, and particularly preferably 400°C to 450°C. Here, from the viewpoint of the homogenization of the particles and the stabilization of the quality, the heating temperature is preferably 200°C or higher, more preferably 350°C or higher, still more preferably 380°C or higher, and particularly preferably 400°C or higher. From the viewpoint of preventing sintering of the particles, the temperature is preferably 600°C or lower, more preferably 500°C or lower, still more preferably 460°C or lower, and particularly preferably 450°C or lower.

When the sulfide powder is heat-treated, a heating time varies depending on the composition of the sulfide powder, that is, the target sulfide solid electrolyte, but is, for example, preferably 10 minutes to 10 hours, more preferably 30 minutes to 9.5 hours, still more preferably 45 minutes to 9 hours, and particularly preferably 1 hour to 9 hours. Here, from the viewpoint of the homogenization of the particles and the stabilization of the quality, the time for the heat treatment is preferably 10 minutes or more, more preferably 30 minutes or more, still more preferably 45 minutes or more, and particularly preferably 1 hour or more. From the viewpoint of the production cost, the time for the heat treatment is preferably 10 hours or less, more preferably 9.5 hours or less, and still more preferably 9 hours or less.

When the sulfide powder is heat-treated, an atmosphere other than the SO₂ concentration during the heat treatment is preferably an inert atmosphere. Examples of the inert atmosphere include a nitrogen gas atmosphere, an argon gas atmosphere, and a helium gas atmosphere.

A dew point during the heat treatment is preferably -20°C or lower, and a lower limit thereof is not particularly limited, and is generally about -80°C. An oxygen concentration is preferably 1000 ppm by volume or less.

The above heating conditions can be used not only in the case where the sulfide solid electrolyte has an argyrodite crystal structure, but also in the case where the sulfide solid electrolyte has a crystal structure such as a LGPS crystal structure or a thiolysicon crystal structure.

The heating temperature when the sulfide precursor powder is heat-treated and crystallized to obtain the sulfide solid electrolyte powder varies depending on the composition of the target sulfide solid electrolyte, but is preferably 300°C to 600°C, more preferably 350°C to 575°C, and even more preferably 400°C to 550°C. Here, from the viewpoint of promoting the crystallization, the heating temperature is preferably 300°C or higher, more preferably 350°C or higher, and still more preferably 400°C or higher. From the viewpoint of preventing thermal decomposition, the heating temperature is preferably 600°C or lower, more preferably 575°C or lower, and still more preferably 550°C or lower.

A time for the heat treatment when the sulfide precursor powder is heat-treated and crystallized to obtain the sulfide solid electrolyte powder varies depending on the composition of the target sulfide solid electrolyte, but is, for example, preferably 0.1 hours to 100 hours, more preferably 0.3 hours to 50 hours, and still more preferably 0.5 hours to 24 hours. Here, from the viewpoint of promoting the crystallization, the time for the heat treatment is preferably 0.1 hours or more, more preferably 0.3 hours or more, and still more preferably 0.5 hours or more. From the viewpoint of the production cost, the time for the heat treatment is preferably 100 hours or less, more preferably 50 hours or less, and still more preferably 24 hours or less.

When the sulfide precursor powder is heat-treated and crystallized to obtain the sulfide solid electrolyte powder, an atmosphere other than the SO₂ concentration during the heat treatment is preferably an inert atmosphere. Examples of the inert atmosphere include a nitrogen gas atmosphere, an argon gas atmosphere, and a helium gas atmosphere.

A dew point during the heat treatment is preferably -20°C or lower, and a lower limit thereof is not particularly limited, and is generally about -80°C. An oxygen concentration is preferably 1000 ppm by volume or less.

The above heating conditions can be used not only in the case where the sulfide solid electrolyte has an argyrodite crystal structure, but also in the case where the sulfide solid electrolyte has a crystal structure such as a LGPS crystal structure or a thiolysicon crystal structure.

The sulfide solid electrolyte powder obtained through step S3 has a smaller difference in average particle diameter than the powder before being subjected to step S3. That is, the average particle diameter of the sulfide powder or the sulfide precursor powder is preferably 1 µm to 300 µm, and the average particle diameter of the sulfide solid electrolyte powder is also preferably 1 µm to 300 µm. Accordingly, the sulfide solid electrolyte is immediately subjected to a fine pulverization step for obtaining fine powders having an average particle diameter of several µm or less, which is necessary when the sulfide solid electrolyte is actually applied to the lithium-ion secondary battery. That is, it is not necessary to perform pulverization again before the fine pulverization. Further, even when the pulverization is performed again, the pulverization can be performed more easily than before.

When a desired average particle diameter is 100 µm or less, a proportion of the sulfide solid electrolyte powder having a particle diameter of 100 µm or less is preferably 90% by mass or more, more preferably 95% by mass or more, still more preferably 98% by mass or more, and particularly preferably 99% by mass or more. The proportion is determined by a powder passage test using a 100 µm mesh pass. A test time of the powder passage test varies depending on an amount of the powder and a size of the mesh path, but 5 minutes or more is usually sufficient, and 10 minutes or more is preferable.

### (Sulfide Solid Electrolyte Powder)

The present invention also relates to the sulfide solid electrolyte powder obtained by the method described in [Method for Producing Sulfide Solid Electrolyte].

Specifically, the sulfide solid electrolyte may be a sulfide solid electrolyte having a crystal structure containing a Li element, a P element, and a S element, which is referred to as LPS, such as Li₇P₃S₁₁; a sulfide solid electrolyte having a crystal structure containing a Li element, a Ge element, a P element, and a S element, which is referred to as LGPS, such as Li₁₀GeP₂S₁₂; a sulfide solid electrolyte having an argyrodite crystal structure containing a Li element, a P element, a S element, and a Ha element; a sulfide solid electrolyte made of a Li-P-S-Ha-based crystallized glass; or a sulfide solid electrolyte having a thiolysicon crystal structure. The sulfide solid electrolyte may include a crystalline phase having the above-described crystal structure and an amorphous phase.

The argyrodite crystal structure is a crystal structure of a group of compounds derived from a mineral represented by a composition formula Ag₈GeS₆. The sulfide solid electrolyte powder according to the present embodiment is not limited to the above-described crystal structure, and some elements may be substituted with other elements.

When the sulfide solid electrolyte powder according to the present embodiment has the argyrodite crystal structure, the sulfide solid electrolyte powder more preferably contains, as the Ha element, at least one element selected from the group consisting of Cl, Br, and I, and still more preferably contains two or more elements.

The sulfide solid electrolyte according to the present embodiment further preferably contains at least one of Cl and Br, and still more preferably contains Cl and Br, as the Ha element.

The argyrodite crystal structure preferably has the above-described structure, and the composition formula is preferably represented by Li_{α}PS_{β}Ha_{γ} and satisfies relationships of 5 ≤ α ≤ 7, 4 ≤ β ≤ 6, and 1.3 ≤ γ ≤ 2. Such an element ratio more preferably satisfies relationships of 5.1 < α < 6.3, 4 < β < 5.3, and 1.4 ≤ γ ≤ 1.9, and still more preferably satisfies relationships of 5.2 < α < 6.2, 4.1 < β < 5.2, and 1.5 ≤ γ ≤ 1.8.

That is, α is preferably 5 or more, more preferably more than 5.1, and still more preferably more than 5.2, and is preferably 7 or less, more preferably less than 6.3, and still more preferably less than 6.2. β is preferably 4 or more, more preferably more than 4, and still more preferably more than 4.1, and is preferably 6 or less, more preferably less than 5.3, and still more preferably less than 5.2. γ is preferably 1.3 or more, more preferably 1.4 or more, and still more preferably 1.5 or more, and is preferably 2 or less, more preferably 1.9 or less, and still more preferably 1.8 or less.

In the argyrodite crystal structure, a part of the S element may be substituted with the Ha element, an O element, Se, Te, BH₄, CN, or the like. Further, a part of the P element may be substituted with a Si element, an Al element, a Sn element, an In element, a Cu element, a Sb element, a Ge element, or the like.

The sulfide solid electrolyte powder according to the present embodiment is made into a fine powder having an average particle diameter of about 0.1 µm to 2.0 µm by the fine pulverization step using the known method in the related art, and then is pressurized together with a positive electrode active material or a negative electrode active material to form an electrode mixture, or, if necessary, is pressurized together with an additive such as a binder to form a solid electrolyte layer, which is suitably used in an all-solid-state lithium secondary battery.

### EXAMPLES

Hereinafter, the present invention is described in detail with reference to Examples, but the present invention is not limited thereto.

Examples 1, 2, 5, and 7 to 9 are Inventive Examples, and Examples 3, 4, and 6 are Comparative Examples.

### [Example 1]

Under a dry nitrogen gas atmosphere, a lithium sulfide powder (manufactured by Sigma, purity 99.98%), a phosphorus pentasulfide powder (manufactured by Sigma, purity 99%), a lithium chloride powder (manufactured by Sigma, purity 99.99%), and a lithium bromide powder (manufactured by Sigma, purity 99.995%) were weighed out so as to have a composition ratio of Li_{5.4}PS_{4.4}Cl_{0.8}Br_{0.8}, and mixed in a mortar, so that a raw material mixture was obtained.

The obtained raw material mixture was placed in a heat-resistant container and heated at 750°C for 60 minutes in an atmosphere of a gas containing a sulfur element to obtain a melt obtained by heating and melting the raw material mixture as a synthetic compound. The gas containing the sulfur element was a mixed gas containing a sulfur gas (Sₓ (x = 2 to 8)) and a N₂ gas as a carrier gas, and a content of the sulfur gas in the mixed gas was 10 vol%.

The obtained melt was then cooled to room temperature at a rate of 5°C/sec, pulverized using a mortar, adjusted to have an average particle diameter of 10 µm to 20 µm, and then subjected to 100 µm mesh pass to obtain a sulfide powder.

Of the obtained sulfide powder, 1 kg was placed in a cylindrical container made of carbon and having a bottom diameter of 150 mm and a height of 150 mm. Thereafter, a heat treatment was performed in an electric furnace in a dry nitrogen gas atmosphere at 400°C for 1 hour. The SO₂ concentration in the atmosphere was evaluated by the method to be described later.

The obtained powder was cooled again to room temperature at 1°C/sec to obtain a sulfide solid electrolyte powder containing argyrodite crystals. The obtained sulfide solid electrolyte powder is found to have almost the same composition as a target composition by a diffraction pattern obtained by the X-ray diffraction measurement and Rietveld analysis.

### [Example 2]

A sulfide solid electrolyte powder was obtained in the same manner as in Example 1 except that the obtained sulfide powder was placed in a cylindrical container made of alumina and having a bottom diameter of 150 mm and a height of 150 mm, and the atmosphere during the heat treatment was changed to a dry nitrogen gas atmosphere into which 10 ppm by volume of oxygen gas was introduced.

### [Example 3]

A sulfide solid electrolyte powder was obtained in the same manner as in Example 1 except that the obtained sulfide powder was placed in a cylindrical container made of quartz and having a bottom diameter of 150 mm and a height of 150 mm.

### [Example 4]

A sulfide solid electrolyte powder was obtained in the same manner as in Example 1 except that the obtained sulfide powder was placed in a cylindrical container made of alumina and having a bottom diameter of 100 mm and a height of 250 mm.

### [Example 5]

A sulfide solid electrolyte powder was obtained in the same manner as in Example 1 except that the obtained sulfide powder was placed in a cylindrical container made of carbon and having a bottom diameter of 100 mm and a height of 250 mm.

### [Example 6]

A sulfide solid electrolyte powder was obtained in the same manner as in Example 1 except that the obtained sulfide powder was placed in a cylindrical container made of alumina and having a bottom diameter of 150 mm and a height of 150 mm.

### [Example 7]

A sulfide solid electrolyte powder was obtained in the same manner as in Example 1 except that a lithium sulfide powder (manufactured by Sigma, purity 99.98%), a phosphorus pentasulfide powder (manufactured by Sigma, purity 99%), and a lithium chloride powder (manufactured by Sigma, purity 99.99% were weighed so as to have a composition ratio of Li_{5.4}PS_{4.4}Cl_{1.6}, and mixed in a mortar under a dry nitrogen gas atmosphere to obtain a raw material mixture, and the obtained sulfide powder was placed in a cylindrical container made of alumina and having a bottom diameter of 150 mm and a height of 150 mm.

### [Example 8]

Under a dry nitrogen gas atmosphere, a lithium sulfide powder (manufactured by Sigma, purity 99.98%), a phosphorus pentasulfide powder (manufactured by Sigma, purity 99%), and a lithium chloride powder (manufactured by Sigma, purity 99.99% were weighed so as to have a composition ratio of Li_{5.4}PS_{4.4}Cl_{1.6}, and mixed in a mortar to obtain a raw material mixture.

The obtained raw material mixture was further mixed using a planetary ball mill (LP-M2 manufactured by ITO SEISAKUSHO CO., LTD.) to obtain a sulfide precursor. The mixing by the planetary ball mill was performed at 400 rpm for 20 hours using a ball having a particle diameter of 10 mm. The obtained sulfide precursor is pulverized using a mortar, adjusted to have an average particle diameter of 10 µm to 20 µm, and then subjected to 100 µm mesh pass to obtain a sulfide precursor powder.

Of the obtained sulfide precursor powder, 1 kg was placed in a cylindrical container made of carbon and having a bottom diameter of 150 mm and a height of 150 mm. Thereafter, an obtained powder was fired by performing a heat treatment at 400°C for 5 hours under a dry nitrogen gas atmosphere in an electric furnace, and then cooled to room temperature at 1°C/sec to obtain a sulfide solid electrolyte powder containing argyrodite crystals.

### [Example 9]

A sulfide solid electrolyte powder was obtained in the same manner as in Example 8 except that the atmosphere during the heat treatment of the obtained sulfide precursor powder was changed to a dry nitrogen gas atmosphere into which 10 ppm by volume of oxygen gas was introduced.

### (Evaluation of Wettability)

In each of Examples 1 to 9, the wettability between the sulfide powder or the sulfide precursor powder and the container was evaluated by placing the sulfur powder on the same material as the container, melting the sulfur powder, and checking the contact angle. This is because the compound that affects the wettability is considered to be sulfur.

Specifically, 30 mg of sulfur powder is placed on a plate made of the same material as each container, and melted at 150°C to examine the contact angle. Droplets obtained by cooling were captured from the side using a camera, and the contact angle with the plate is determined.

The results are shown in the item "wettability" in Table 1, and evaluation criteria are as follows.
A: the contact angle is 50° or more, which means that the wettability is very low and very good.
B: the contact angle is 25° or more and less than 50°, which means that the wettability is low and good (passable).
C: the contact angle is less than 25°, which means that the wettability is high and poor.

### (Evaluation of SO₂ Concentration)

In each of Examples 1 to 9, the SO₂ concentration in the atmosphere during the heat treatment was obtained by measuring an exhaust gas using a detector tube (sulfur dioxide No. 5La, manufactured by GASTEC). The measurement was performed immediately after the temperature in the electric furnace reached a target heat treatment temperature.

The results are shown in the item "SO₂ concentration" in Table 1.

### (Evaluation of Aggregability)

Of the sulfide solid electrolyte powder obtained in each of Examples 1 to 9, 100 g was subjected to the 100 µm mesh pass using an automatic vibration sieving machine (manufactured by Retsch, electromagnetic sieve shaker AS200 basic). A mesh pass time was 10 minutes. A ratio of the powder remaining on the mesh is shown in "powder residue" of "aggregability" in Table 1.

The powder residue is related to the proportion of the sulfide solid electrolyte powder having the particle diameter of 100 µm or less. That is, the powder residue means a ratio of the sulfide solid electrolyte powder having the particle diameter of more than 100 µm. Specifically, the powder residue being 10% by mass or less is synonymous with the ratio of the sulfide solid electrolyte powder having the particle diameter of 100 µm or less being 90% by mass or more. That is, it is considered favorable if the powder residue is 10% by mass or less, more preferably 5% by mass or less, still more preferably 2% by mass or less, and particularly preferably 1% by mass or less.

**[Table 1]**

| | Composition | Heat treatment condition | | | | | | Aggregability |
|---|---|---|---|---|---|---|---|---|
| | | Container material | Container size | Oxygen gas concentration | Heating | SO₂ concentration | Wettability | Powder residue |
| Example 1 | Li_{5.4}PS_{4.4}Cl_{0.8}Br_{0.8} | Carbon | □ 150 mm × 150 mm H | None | 400°C | 5 ppm | A | <1% by mass |
| Example 2 | Li_{5.4}PS_{4.4}Cl_{0.8}Br_{0.8} | Alumina | □ 150 mm × 150 mm H | 10 ppm | 400°C | 10 ppm | B | 2% by mass |
| Example 3 | Li_{5.4}PS_{4.4}Cl_{0.8}Br_{0.8} | Quartz | □ 150 mm × 150 mm H | None | 400°C | None | C | >10% by mass |
| Example 4 | Li_{5.4}PS_{4.4}Cl_{0.8}Br_{0.8} | Alumina | □ 100 mm × 250 mm H | None | 400°C | None | B | >10% by mass |
| Example 5 | Li_{5.4}PS_{4.4}Cl_{0.8}Br_{0.8} | Carbon | □ 100 mm × 250 mm H | None | 400°C | 5 ppm | A | 5% by mass |
| Example 6 | Li_{5.4}PS_{4.4}Cl_{0.8}Br_{0.8} | Alumina | □ 150 mm × 150 mm H | None | 400°C | None | B | >10% by mass |
| Example 7 | Li_{5.4}PS_{4.4}Cl_{1.6} | Carbon | □ 150 mm × 150 mm H | None | 400°C | 4 ppm | A | <1% by mass |
| Example 8 | Li_{5.4}PS_{4.4}Cl_{1.6} | Carbon | □ 150 mm × 150 mm H | None | 400°C | 1 ppm | A | 3% by mass |
| Example | Li_{5.4}PS_{4.4}Cl_{1.6} | Carbon | □ 150 mm × 150 mm H | 10 ppm | 400°C | 10 ppm | A | <1% by mass |

From the above results, it is found that, by setting the SO₂ concentration during the heat treatment to 1 ppm by volume to 1000 ppm by volume regardless of the solid phase reaction method or the melting method, the aggregation of particles during the heat treatment is prevented, and a sulfide solid electrolyte powder having a fine particle size is obtained.

The SO₂ concentration during the heat treatment is achieved by a reaction of a sulfur content desorbed from the sulfide powder or the sulfide precursor powder with the oxygen element, and it is found that, as an oxygen element source, a small amount of oxygen gas is actively introduced, and an oxygen content adsorbed in the container is also effective. From comparison of the results of Example 1 and Example 5, Example 1 and Example 3, and the like, it is found that an aggregation preventing effect became remarkable by making the container shape and the wettability between the container and the sulfide powder or the sulfide precursor powder appropriate.

Although the present invention has been described in detail with reference to specific embodiments, it is apparent to those skilled in the art that various changes and modifications can be made without departing from the spirit and scope of the present invention. The present application is based on a Japanese Patent Application (Japanese Patent Application No. 2023-011196) filed on January 27, 2023, the content of which is incorporated herein by reference.

## Claims

1. A method for producing a sulfide solid electrolyte powder, the method comprising:
mixing a raw material to obtain a raw material mixture;
synthesizing at least one powder of a sulfide powder and a sulfide precursor powder from the raw material mixture; and
subjecting the powder to a heat treatment,
wherein the heat treatment is performed in an atmosphere having a SO₂ concentration of 1 ppm by volume to 1000 ppm by volume.

2. The method for producing a sulfide solid electrolyte powder according to claim 1,
wherein the powder is placed in a container during the heat treatment, and
the container satisfies a relationship of 2a > b, a being a long side of a bottom surface and b being a height.

3. The method for producing a sulfide solid electrolyte powder according to claim 2, wherein the container has surface roughness Ra of 0.1 µm to 30 µm.

4. The method for producing a sulfide solid electrolyte powder according to claim 2, wherein a material for the container comprises at least one of aluminum and carbon as an element.

5. The method for producing a sulfide solid electrolyte powder according to claim 2, wherein the container has a porosity of 1% to 50%.

6. The method for producing a sulfide solid electrolyte powder according to claim 1 or 2, wherein the powder has an average particle diameter of 1 µm to 100 µm.

7. The method for producing a sulfide solid electrolyte powder according to claim 1 or 2, wherein in the synthesis, a melt obtained by heating the raw material mixture is cooled to obtain the powder comprising the sulfide powder.

8. The method for producing a sulfide solid electrolyte powder according to claim 1 or 2, wherein in the synthesis, the raw material mixture is mechanically milled to obtain the powder comprising the sulfide precursor powder.

9. The method for producing a sulfide solid electrolyte powder according to claim 1 or 2,
wherein the raw material comprises a Li element, a P element, an S element, and a Ha element, and
the obtained sulfide solid electrolyte powder has an argyrodite crystal structure.

10. The method for producing a sulfide solid electrolyte powder according to claim 9, wherein the heat treatment is performed at a temperature of 200°C to 600°C.
